# EUROPÄISCHE PATENTSCHRIFT

(11) **EP 4 442 621 B1**
(45) Veröffentlichungstag und Bekanntmachung des Hinweises auf die Patenterteilung: **18.11.2026**
(21) Anmeldenummer: 24191153.6
(22) Anmeldetag: 21.05.2019
(51) Int. Cl.: B65G 53/46

(54) **ZELLENRADSCHLEUSE UND VERFAHREN ZUM BETREIBEN EINER ZELLENRADSCHLEUSE**
CELLULAR WHEEL SLUICE AND METHOD FOR OPERATING A CELLULAR WHEEL SLUICE
VANNE À ROUE CELLULAIRE ET PROCÉDÉ DE FONCTIONNEMENT D'UNE VANNE À ROUE CELLULAIRE

(30) Priorität: 11.06.2018 DE 102018113871
(43) Veröffentlichungstag der Anmeldung: 09.10.2024
(62) Dokumentnummer(n) der früheren Anmeldung(en) nach Art. 76 EPÜ: 19175558.6 / 3 581 530
(73) Patentinhaber: BMA Braunschweigische Maschinenbauanstalt GmbH, 38122 Braunschweig (DE)
(72) Erfinder: BONATH, Carsten, 38122 Braunschweig (DE); HAFEMANN, Hartmut, 38122 Braunschweig (DE)
(74) Vertreter: Gramm, Lins & Partner Patent- und Rechtsanwälte PartGmbB

(56) Entgegenhaltungen:
- EP-A1- 3 034 690
- DE-A1- 4 008 407
- DE-A1- 4 135 395
- GB-A- 695 382
- US-A- 5 544 995
- US-A1- 2005 098 586

## Beschreibung

Die Erfindung betrifft eine Zellenradschleuse mit einem Gehäuse, das einen Einlass und einen Auslass und einen in dem Gehäuse drehbar um eine Drehachse gelagerten Rotor aufweist, wobei in dem Rotor Taschen ausgebildet sind, in denen Material von dem Einlass zu dem Auslass transportiert wird. Die Erfindung betrifft ebenfalls ein Verfahren zum Betreiben einer solchen Zellenradschleuse.

Zellenradschleusen dienen häufig zum Transport von Material, insbesondere von Feststoffen, aus einem Behälter oder in einen Behälter. **In** diesem Behälter herrschen häufig Überdruckbedingungen und/oder erhöhte Temperaturen. Beispielsweise können in einem Wirbelschichtverdampfungstrockner Partikel, z. B. Hackschnitzel, Rübenschnitzel oder ähnliche Schüttgüter, über eine erste Zellenradschleuse eingetragen, in dem Wirbelschichtverdampfungstrockner unter hohem Druck und bei hohen Temperaturen getrocknet und am Ende des Trocknungsprozesses über eine weitere Zellenradschleuse wieder ausgetragen werden. Sowohl beim Einschleusen in als auch beim Ausschleusen aus dem Druckbehälter muss ein Druckausgleich zwischen dem Druck vor und nach der Zellenradschleuse erfolgen. Bei einem Hineintransportieren von Material wird der Dampf oder die Luft mit hohem Druck in die zu entleerende Tasche gedrückt, wenn eine vorlaufende Taschenkante eine Kante des Einlasses überschreitet. Umgekehrt wird bei einem Heraustransportieren aus dem Wirbelschichtverdampfungstrockner eine Druckverringerung am Auslass durchgeführt, wenn die vorlaufende Taschenkante einer Tasche die Auslassöffnung überschreitet. Bei der Drehung des Rotors beim Hineintransportieren in dem Druckbehälter werden die Taschen mit Produkt und dem jeweils oberhalb der Schleuse vorhandenen Druck gefüllt und dann in einen Bereich gedreht, in dem ein Druckabschluss sowohl zu dem Bereich oberhalb als auch zu dem Bereich unterhalb der Zellenradschleuse gewährleistet ist. Bei einem Weiterdrehen öffnet sich dann ein schmaler Spalt zwischen der Tasche und dem Auslass der Zellenradschleuse. In diesem Moment strömt schlagartig gasförmiges Medium, zum Beispiel Dampf mit hohem Druck und entsprechend hoher Geschwindigkeit, in die Tasche ein. Dabei wird dann der Druckausgleich zu dem Bereich unterhalb der Zellenradschleuse hergestellt. Die jetzt mit Überdruck beaufschlagte Tasche wird weiter gedreht und das Produkt fällt durch den unteren Auslass der Zellenradschleuse heraus. Die leere Tasche wird weiter gedreht. Es folgt ein Zustand, bei dem erneut ein Druckabschluss sowohl zu dem Bereich unterhalb als auch zu dem Bereich oberhalb der Zellenradschleuse existiert. Im weiteren Verlauf öffnet sich dann die Tasche zunächst einen schmalen Spalt zu dem Bereich oberhalb der Zellenradschleuse, und der in der Tasche enthaltene Überdruck entweicht schlagartig mit hohen Strömungsgeschwindigkeiten. Die Strömungsgeschwindigkeiten des Gases verursachen meist in Verbindung mit vorhandenen Feststoffresten, die dann ebenfalls mit hohen Strömungsgeschwindigkeiten bewegt werden, einen hohen Verschleiß an den Stellen, auf die die Strömungen auftreffen.

Die Verhältnisse sind bei dem Austragen von Produkt aus dem Druckbehälter mit einer Zellenradschleuse sinngemäß, allerdings findet das Ein- bzw. Ausströmen des Gases in die oder aus den Taschen umgekehrt statt. Bei dem Öffnen der Tasche zum Auslass der Zellenradschleuse strömt der Tascheninhalt, also Fluid und Produkt gemeinsam, aus der Tasche und der Zellenradschleuse heraus. Die sich weiterdrehende leere Tasche wird dann, wenn sie den Spalt zu dem oberen Ende der Zellenradschleuse öffnet, mit sehr hoher Geschwindigkeit gefüllt. Wenn der Druckbehälter ein Trockner ist, dann ist üblicherweise das trockene Produkt noch abrasiver als feuchtes Produkt. Entsprechend höher fällt der Verschleiß aus. Die Problematik ist jedoch bei einer Ein- und Austragsschleuse sehr ähnlich.

Bei Zellenradschleusen, die Produkt in einen Druckbehälter eintragen, gibt es die Problematik, dass Überdruckgas, das in den Einlaufbereich der Zellenradschleuse einströmt, das Beladen der Taschen mit Produkt stark behindert. Aus diesem Grund gibt es im Stand der Technik bekannte Vorrichtungen, mit denen ein Druckausgleich mit Hilfe von Ausgleichsöffnungen bzw. -rohrleitungen in dem Zeitpunkt durchgeführt wird, bei dem ein Druckabschluss sowohl zu dem Bereich unterhalb als auch oberhalb der Zellenradschleuse existiert.

Der Rotor einer Zellenradschleuse dreht sich um seine Drehachse in dem Gehäuse und weist eine Vielzahl von Taschen auf, die sich radial nach innen in Richtung auf die Drehachse erstrecken. Die Taschen weisen eine Taschenöffnung auf, die auf dem Umfang des Rotors angeordnet sind und als Ausnehmungen in einer Mantelfläche ausgebildet sein können. Der Einlass einer Zellenradschleuse liegt in Schwerkraftrichtung gesehen an ihrem oberen Ende, der Auslass üblicherweise an einem unteren Ende. Über das Drehen des Rotors wird Material, das durch den Einlass in die Taschen gefallen ist, zum Auslass transportiert und fällt dort aus der Tasche. Zwischen dem Einlass und dem Auslass ist der Rotor vorteilhafterweise so in dem Gehäuse geführt, dass nahezu kein Hochdruckfluid aus dem Wirbelschichtverdampfungstrockner oder einem anderen Behälter hindurchtreten und aus dem Druckbehälter entweichen kann. Die Zellenradschleuse ist somit sowohl eine Dichtung für den Behälter gegenüber der Umgebung als auch eine Transporteinrichtung.

Während des Betriebes einer solchen Zellenradschleuse kann es aufgrund des zu transportierenden Materials und insbesondere aufgrund der schlagartigen Drucksprünge zu einem hohen Verschleiß an dem Gehäuse oder dem Rotor kommen, was zu einer Vergrößerung des Spaltes zwischen dem Gehäuse und dem Rotor und damit zu Undichtigkeiten führen kann. Sobald die Undichtigkeiten zu groß werden, müssen Wartungsarbeiten durchgeführt werden, was einen Stillstand der gesamten Anlage zur Folge hat. Insbesondere beim Transport von abrasivem Material kann durch die Druckveränderungen am Einlass und Auslass ein hoher Verschleiß an dem Gehäuse und dem Rotor entstehen. Diese Abnutzungen sind durch hohe Ein- oder Austrittsgeschwindigkeiten des Gas-Material-Mixes von mehreren 100 m/s bis maximal zur Schallgeschwindigkeit erklärbar. Darüber hinaus ist ein erhöhter Verschleiß an dem Gehäuse festzustellen, wobei die Verschleißspuren der Kontur der Taschenöffnung auf dem Rotorumfang zum Zeitpunkt des Öffnens der Tasche entspricht, also beispielsweise wenn eine leere Tasche mit Material aus einem unter hohem Druck stehenden Behälter befüllt wird, um das Material aus dem Behälter zu transportieren.

Eine Zellenradschleuse gemäß dem Stand der Technik ist in der US 6,966,466 B2 beschrieben.

Die EP 3 034 690 A1 betrifft eine Zellenradschleusenanordnung mit einem Gehäuse, das einen Einlass und einen Auslass aufweist, um zerkleinertes Fasermaterial abzuführen, wobei eine innere Wand des Gehäuses eine Ausnehmung definiert, in der ein Scherkantenanordnung angeordnet ist. Eine Spitze der Scherkantenanordnung weist eine Schneide auf und verbleibt in der Ausnehmung, sodass die Spitze sich nicht in den Einlass erstreckt.

Die DE 41 35 395 A1 betrifft eine Zellenradschleuse zum Dosieren von Schüttgut, mit einem sich um eine horizontale Rotorwelle in einem Rotorgehäuse drehenden Rotor mit radialen Schaufeln zur Bildung von Schüttgutkammern. Zur Reinigung der Zellenradschleuse ist der Rotor seitlich aus dem Rotorgehäuse an Führungen herausfahrbar. Die innere Lauffläche im Zellenradgehäuse und die äußere Kontur des im Zellenradgehäuse laufenden Rotors weisen einen gleichen konischen Querschnittsverlauf auf.

Die DE 40 08 407 A1betrifft eine Zellenradschleuse mit einem Gehäuse mit einer Einlassöffnung und einer Auslassöffnung, mit Lagerdeckeln, in denen ein Zellenrad über eine Welle rotierbar gelagert ist. Das Zellenrad ist axial an den Ringspalten, die durch die die Zellen axial abschließenden Rotorseitenscheiben und durch die Gehäuseinnenwand gebildet sind und/ oder radial an den durch die Zellentrennwände und die Gehäuseinnenwand gebildeten Längsspalten durch eine Dichtungsvorrichtung abgedichtet. Die Dichtungsvorrichtung weist eine Dichtung, ein Druckteil und eine über eine Druckleitung an eine Druckquelle angeschlossenes Druckglied au, wobei die Druckquelle einen periodisch veränderlichen Druck bereitstellt.

Die US 5 544 995 A gemäß dem Oberbegriff des Anspruchs 1 betrifft eine Zellenradschleuse mit einem Rotorgehäuse mit einem Einlass und einem Auslass, einem Rotor, der drehbar im Rotorgehäuse sitzt und einer Vielzahl von Taschen, die in regelmäßigen Abständen in Umfangsrichtung auf der Außenumfangsfläche des Rotors angeordnet und so angepasst sind, dass sie bei Drehung des Rotors nacheinander mit dem Einlass und dem Auslass des Rotorgehäuses verbunden werden. Zwei Verbindungsöffnungen sind in getrennten Bereichen angeordnet und erstrecken sich in Bezug auf die Drehrichtung des Rotors jeweils vom Einlass zum Auslass des Rotorgehäuses und vom Auslass zum Einlass. Druckausgleichsrohre verbinden die Verbindungsöffnungen in den Bereichen miteinander.

Aufgabe der vorliegenden Erfindung ist es, eine Zellenradschleuse und ein Verfahren zum Betreiben einer Zellenradschleuse bereitzustellen, die eine längere Standzeit ermöglichen und den Verschleiß reduzieren.

Erfindungsgemäß wird diese Aufgabe durch eine Zellenradschleuse mit den Merkmalen des Anspruches 1 und ein Verfahren mit den Merkmalen des Anspruchs 13 gelöst. Vorteilhafte Ausgestaltungen und Weiterbildungen der Erfindung sind in den Unteransprüchen offenbart.

Die Zellenradschleuse mit einem Gehäuse, das einen Einlass und einen Auslass und ein in dem Gehäuse drehbar um eine Drehachse gelagerten Rotor aufweist, wobei in dem Rotor Taschen ausgebildet sind, in denen Material von dem Einlass zu dem Auslass transportiert wird, sieht vor, dass der Rotor entlang der Drehachse verschieblich gelagert ist. Innerhalb des Gehäuses ist der Rotor der Zellenradschleuse in Axialrichtung, also entlang der Drehachse linear verschiebbar ausgeführt, so dass der mechanische Verschleiß, beispielsweise aufgrund von Abrasion oder Kavitation. auf eine größere Fläche verteilt wird. Bei einer axial im Wesentlichen unveränderbar ausgeführten Lagerung des Rotors treten die Verschleißeffekte an immer der gleichen Stelle auf, wenn sich eine Tasche zum Einlass oder zum Auslass hin öffnet. Da besonders tiefe Riefen oder Auswaschungen an der Gehäuseinnenwand oder der Rotorumfangsfläche sich besonders negativ auf die Dichtigkeit auswirken, ist eine Verteilung des Verschleißes auf eine größere Fläche vorteilhaft. Die Vergrößerung der für einen Verschleiß zur Verfügung stehenden Fläche wird durch eine axiale Verschieblichkeit des Rotors in dem Gehäuse erreicht. Tiefe Riefen oder Auswaschungen können in ihrer Entstehung durch Verschieben des Rotors zeitlich hinausgezögert werden, so dass lediglich flache Riefen oder Auswaschungen in dem Rotor oder dem Gehäuse auftreten, die die Funktionalität der Zellenradschleuse weniger beeinträchtigen.

Die Erfindung, sieht vor, dass der Rotor oszillierend entlang der Drehachse gelagert oder betreibbar ist. Durch die hin- und hergehende Bewegung des Rotors in dem Gehäuse während des Betriebes der Zellenradschleuse wird die zur Verfügung stehende Materialoberfläche maximal ausgenutzt und ein gleichmäßiger Verschleiß erreicht, wodurch die Standzeiten vergrößert werden können.

Dem Rotor ist ein Antrieb zugeordnet, um ihn entlang der Drehachse oszillierend während des Betriebes der Zellenradschleuse entlang der Drehachse zu verschieben. Der Antrieb kann elektrisch, pneumatisch, hydraulisch oder anderweitig ausgebildet sein. Es kann auch eine Kopplung des Rotorantriebes mit dem Antrieb zur Verschiebung entlang der Drehachse über ein Getriebe erfolgen, so dass sich ein modularer Aufbau der Zellenradschleuse ergibt und nur ein einziger Anschluss für einen externen Antrieb, beispielsweise einen Elektromotor, vorgesehen sein muss. Bei einer Ausgestaltung des Antriebes zur Verschiebung des Rotors unabhängig von dem Drehantrieb des Rotors ist es möglich, eine Entkopplung der Verschiebebewegung von der Drehbewegung vorzusehen. Somit kann auf unterschiedliche Materialpaarungen, sich verändernde Betriebsbedingungen, veränderte transportierte Materialien oder Verschleißbedingungen reagiert werden. Liegt ein höherer Verschleiß vor, kann durch eine Erhöhung der Frequenz oder einer Erhöhung der Amplitude der Verschiebung darauf reagiert werden. Wird unter verschleißarmen Bedingungen die Zellenradschleuse eingesetzt, kann mit einer geringeren Frequenz und gegebenenfalls mit einer geringeren Amplitude die Verschiebung durchgeführt werden, um Energie beim Betreiben der Zellenradschleuse zu sparen. Der Antrieb verlagert en Rotor während des Betriebes der Zellenradschleuse bevorzugt kontinuierlich oder permanent, so dass keine lokalen Überbeanspruchungen und lokale Verschleißspitzen entstehen.

Der Rotor kann um eine Amplitude zwischen 0,5% und 15% der Rotorbreite, insbesondere in einem Bereich zwischen 5 mm und 150 mm in Richtung entlang der Drehachse verschieblich gelagert sein. Ein solcher Verschiebeweg ist hinsichtlich der Lagerung des Rotors in dem Gehäuse vergleichsweise leicht zu realisieren und stellt einen guten Kompromiss zwischen einer Vergrößerung der Materialfläche und einer guten Ausnutzung der Eingangsöffnung und Ausgangsöffnung und der Taschengröße dar. Die Breite der Taschen, also die Längserstreckung entlang der Drehachse des Rotors, soll möglichst groß sein, um viel Material durch den Einlass aufzunehmen und an den Auslass abzugeben. Grundsätzlich ist es auch möglich, einen grö-βeren Verschiebebereich ausgehend von einer Ausgangsstellung zu wählen. Um eine ausreichende Dichtigkeit bereitzustellen, ist beiderseits der Taschenöffnung in Axialrichtung ein minimaler Materialüberstand notwendig, der beispielsweise in einem Bereich von 20 mm liegen kann.

Bevorzugt wird der Rotor kontinuierlich oder permanent oszillierend bewegt. Durch die kontinuierliche Verlagerung von einem Extrempunkt zu dem anderen werden Rastungen oder Riefen und damit ungleichmäßige Verschleißerscheinungen an der Rotoroberfläche oder dem Gehäuse vermindert.

Eine Weiterbildung der Erfindung, die auch unabhängig eine Verschleißverringerung bewirkt, sieht vor, dass an zumindest einer der an einem äußeren Umfang des Rotors befindlichen Taschenkante einer Tasche eine Ableiteinrichtungen angeordnet ist, die das Material, das in der Zellenradschleuse von dem Einlass zu dem Auslass transportiert wird, in das Tascheninnere ablenkt und so den Verschleiß an dem Gehäuse reduziert. Zellenradschleusen werden häufig mit sehr hohen Differenzdrücken betrieben. Der zu erwartende Verschleiß steigt mit der Höhe des Differenzdruckes. Wenn die Tasche des Rotors bei der Drehung die Tasche zum Einlass oder zum Auslass freigibt, schießt bedingt durch den Differenzdruck eine dem jeweiligen Zellenvolumen entsprechende Dampfmenge mit sehr hoher Geschwindigkeit in die Tasche ein bzw. aus der Tasche heraus, je nachdem, ob die Zellenradschleuse zum Befüllen oder Entleeren des Druckbehälters eingesetzt wird. Diese Strömung verursacht an den Übergangsstellen, an denen sich die Taschenöffnung noch innerhalb des Gehäuses befindet, einen erhöhten Verschleiß. Durch die Ableiteinrichtung an den Taschenkanten der Taschen des Zellenradschleusenrotors wird der Dampfstrom oder der Medienstrom von den kritischen Stellen weggeleitet und insbesondere in das Tascheninnere oder in Richtung tangential zur Umfangsfläche abgeleitet, wodurch sich zusätzlich oder auch nur alleine eine Verschleißverringerung an der Rotoraußenseite und/oder Gehäuseinnenseite ergibt. Durch die Ableiteinrichtung wird die Taschenöffnung in Richtung auf die Drehachse, also zum Rotorinneren hin, vergrößert. Bei einer in Axialrichtung verlaufenden Taschenkante, also einer vorlaufenden Taschenkante oder nachlaufenden Taschenkante der Tasche, verläuft die Ableiteinrichtung geneigt und/oder gekrümmt in Drehrichtung oder geneigt und/oder gekrümmt entgegen der Drehrichtung. Die Ableiteinrichtungen bilden somit jeweils einen Hinterschnitt aus, der eine entsprechende Strömungsumleitung bewirkt. Durch die Ableiteinrichtung weitet sich die Taschenöffnung in Richtung auf das Tascheninnere oder die Drehachse auf. Bei einer überwiegend in Umfangsrichtung verlaufenden Taschenkante ist die Ableiteinrichtung jeweils in Axialrichtung nach außen geneigt, führt also von dem Außenumfang des Rotors radial nach innen und ist in der jeweiligen Axialrichtung nach außen geneigt. Die Ableiteinrichtung ist in einer Variante der Erfindung als zumindest eine Abschrägung, als zumindest ein Radius oder als eine Kombination aus zumindest einer Abschrägung und einem Radius ausgebildet.

Die Ableiteinrichtung kann einstückig mit dem Rotor an dem Rotorumfang ausgebildet sein, also eine Formgebung der Tasche oder Taschenkante darstellen, alternativ kann die Ableiteinrichtung auch als separate Komponente ausgebildet sein, die an dem Rotor befestigt ist. Durch die Ausgestaltung der Ableiteinrichtung als separates Element, das an dem Rotor befestigt werden kann, ist ein Austausch einer verschlissenen Ableiteinrichtung möglich, Darüber hinaus können Anpassungen in der Umleiteinrichtung oder den Grad der Umleitung durch einen Austausch der jeweiligen Ableiteinrichtung vorgenommen werden. Die Ableiteinrichtung kann mehrteilig ausgebildet sein, und unterschiedliche oder gleiche Konturen an jeder Komponente der mehrteiligen Ableiteinrichtung aufweisen. An einer Taschenkante kann auch eine Kombination aus einer separaten Ableiteinrichtung und einer einstückig ausgebildeten Ableiteinrichtung angeordnet sein.

Die Ableiteinrichtung kann in einem Winkel zwischen 5° und 75 ° zum Radius von der Taschenkante der Taschenöffnung zu der Drehachse oder zu der Senkrechten zu der Drehachse geneigt sein, je nachdem, an welcher der Taschenkanten die Ableiteinrichtung angeordnet ist. Bei an in Axialrichtung verlaufenden Taschenkanten ist die Ableiteinrichtung in oder entgegen der Drehrichtung des Rotors geneigt und/oder gekrümmt, so dass die Ableiteinrichtung in das Tascheninnere führt und eine sich in Richtung auf das Tascheninnere vergrößernde, trichterartige Form aufweist. Bei an in Umfangsrichtung des Rotors verlaufenden Taschenkanten ist die Ableiteinrichtung in Axialrichtung der Drehachse geneigt und/oder gekrümmt.

An der Taschenkante der Tasche kann ein Absatz ausgebildet sein, der von dem Rotorumfang bis zu der Ableiteinrichtung reicht. Durch die Taschenkante wird ein Mindestmaß an Stabilität des Rotors und des Rotorumfanges im Bereich der Taschenkante gewährleistet.

Der Rotor weist bevorzugt drei bis 15 Taschen auf, die gleichmäßig über den Rotorumfang verteilt sind.

**In** einer Ausgestaltung der Erfindung ist der Rotor in dem Gehäuse zwischen zwei auswechselbaren Backen gelagert. Die Backen können verschieblich in dem Gehäuse gelagert sein und mit einer Verstelleinrichtung und ggf. einer Vorspannung in Richtung auf den Rotor versehen sein, um eine ausreichende Dichtwirkung zwischen dem Rotor und dem Gehäuse, bzw. den Backen bereitzustellen. So können auch Verschleiß und Wärmedehnungen an Backen und Rotor ausgeglichen werden.

Rohrleitungen und/oder Öffnungen für einen Druckausgleich in den Taschen nach Durchlaufen des Einlasses oder Auslasses und vor Erreichen des Auslasses oder Einlasses können in oder an dem Gehäuse angeordnet oder ausgebildet sein und mit den Taschen in strömungstechnischer Verbindung stehen. Die Druckdifferenz zwischen dem Innendruck in den Taschen und dem an dem Auslass oder Einlass anliegenden Druck kann über die Leitungen und/oder Öffnungen verringert oder ausgeglichen werden, um einen schlagartigen Eintritt oder Austritt von Fluid und Produkt zu vermindern oder zu verhindern.

Das Verfahren zum Betreiben einer Zellenradschleuse, wie sie vorstehend beschrieben worden ist, sieht vor, dass der Rotor während der Drehung um die Drehachse entlang der Drehachse oszillierend verschoben wird.

Eine Weiterbildung sieht vor, dass der Rotor permanent oszillierend, während des Betriebs des Rotors, entlang der Drehachse verschoben wird. Die Amplitude der Verschiebung beträgt bevorzugt zwischen 5 mm und 150 mm. Die Frequenz der Axialverschiebung entlang der Drehachse kann abhängig von den Betriebsbedingungen gewählt werden. Eine Variante der Erfindung sieht vor, dass die beiden Endpunkte der Verschiebebewegung einmal pro Stunde erreicht werden. Die Axialbewegung des Rotors verhindert oder verringert eine Riefenbildung, eine kontinuierliche oszillierende Bewegung, verringert die Wahrscheinlichkeit einer Bildung von tiefen Riefen und verlängert somit die Standzeit der Zellenradschleuse.

Ein Druckausgleich in den Taschen zu dem am Einlass oder Auslass anliegenden Druck kann mittels Rohrleitungen und/oder Ausgleichsöffnungen vor dem Öffnen der Taschen in Richtung Einlass und/oder Auslass ausgeführt werden.

Nachfolgend werden Ausführungsbeispiele der Erfindung anhand der beigefügten Figuren näher erläutert. Es zeigen:
- Figur 1 -: eine schematische Darstellung einer Zellenradschleuse im Längsschnitt;
- Figur 2-: eine schematische Darstellung einer Zellenradschleuse im Querschnitt;
- Figur 3 -: eine schematische Darstellung eines Rotors im Längsschnitt;
- Figur 4 -: eine Detaildarstellung der Figur 3;
- Figur 5 -: eine schematische Darstellung eines Rotors im Querschnitt;
- Figur 6 -: eine Detailansicht der Figur 5; sowie
- Figur 7 -: eine Variante der Kontur einer Tasche.

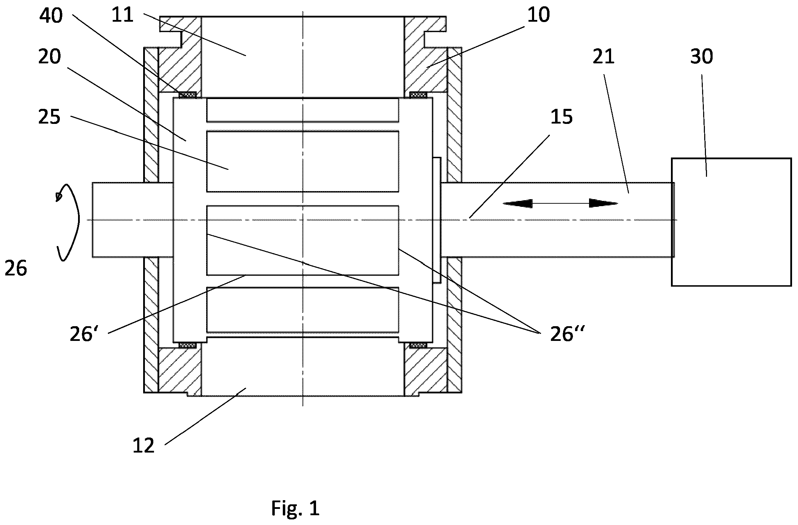

**In** der Figur 1 ist in einem Längsschnitt eine Zellenradschleuse in einer schematischen Darstellung gezeigt. Die Zellenradschleuse weist ein Gehäuse 10 auf, das einen in der Zeichnung oben befindlichen Einlass 11 und einen unterhalb, gegenüber dem Einlass 11 angeordneten Auslass 12 aufweist. Von dem Einlass 11 wird nicht dargestelltes Material, beispielsweise aus einem Wirbelschichtverdampfungstrockner, zu dem Auslass 12 transportiert. Der Transport erfolgt durch einen Rotor 20, der drehbar in dem Gehäuse 10 der Zellenradschleuse um eine Drehachse 15 gelagert ist. Innerhalb des Rotors 20, der einen zylindrischen Umfang aufweist, sind Taschen 25 ausgebildet, die voneinander durch Trennwände 22 getrennt sind und sich von dem Rotorumfang in Richtung auf das Rotorinnere, also in Richtung der Drehachse 15 erstrecken. Die Taschen 25 weisen eine Taschenöffnung auf, die durch Taschenkanten 26, 26' und 26" an dem Rotorumfang begrenzt ist. **In** dem dargestellten Ausführungsbeispiel weisen die Taschen 25 einen rechteckigen Querschnitt auf. Die Taschenöffnung erstreckt sich in Axialrichtung, also entlang der Drehachse 15, über eine Breite, die der Breite des Einlasses 11 und des Auslasses 12 abzüglich der Amplitude des vorgesehenen Oszillationsweges entspricht. **In** der dargestellten Position befindet sich der Rotor 20 in einer mittigen Stellung. Die Befüllung der jeweiligen Tasche 25 erfolgt, wenn die in Drehrichtung vordere Taschenkante 26 oder vorlaufende Taschenkante 26 einer Zelle 25 den Einlass 11 erreicht und somit eine Verbindung zu der Materialbereitstellungseinrichtung oder dem Behälter hergestellt wird, aus dem das Material heraustransportiert werden soll. Steht dieser Behälter unter einem hohen Druck, wird das Material mit einer sehr hohen Geschwindigkeit durch den sich vergrößernden Spalt zwischen dem Einlass 11 und der vorlaufenden Taschenkante 26 zusammen mit den Druckmedium Dampf hindurchgedrückt, bis die Tasche 25 vollständig befüllt ist. Der Befüllvorgang ist aufgrund von abrasiven Eigenschaften des Materials und Kavitation mit einem Verschleiß an dem Rotor 20 und dem Gehäuse 10 verbunden.

Während der Weiterbewegung des Rotors 20 wird die Tasche 25 vollständig mit Material gefüllt und unter einen Druck gesetzt, der dem Innendruck des Behälters entspricht. Bei einer Weiterbewegung des Rotors 20 in Richtung auf den Auslass 12 wird das Taschenvolumen eingeschlossen, wenn die in Drehrichtung hintere, nachlaufende Taschenkante 26' den Einlass 11 passiert hat. Das Taschenvolumen ist dann abgedichtet und steht weiterhin unter dem Behälterdruck. Wird dann der Auslass 12 erreicht, entspannt sich der Druck in dem Taschenvolumen und das Material wird aus dem Auslass 12 zur Weiterverarbeitung entlassen. Auch durch das Entspannen und den Austrag des Materials aus der Tasche 25 entsteht ebenfalls ein Verschleiß an dem Rotor 20, an dem Rotorumfang und an dem Gehäuse 10.

Axial neben den Taschen 25 sind umlaufende, ringförmige oder scheibenförmige Materialabschnitte vorgesehen, an deren Außenseite statische oder dynamische Dichtungen 40 angeordnet sind, um einen Druckverlust in Axialrichtung zu vermeiden.

Der Rotor 20 ist mit einer Welle 21 verbunden, über die der Rotor 20 durch einen Antrieb 30 in Drehung versetzt werden kann. Darüber hinaus ist der Antrieb 30 dazu ausgebildet, den Rotor 20 axial entlang der Drehachse 15 zu verlagern, was durch den Doppelpfeil angedeutet ist. Die Drehbewegung ebenso wie die Verschiebebewegung in Axialrichtung kann durch einen gemeinsamen Antrieb 30 erfolgen, alternativ kann die Axialverschiebung durch einen separaten Antrieb 30 erfolgen. Wie durch den Doppelpfeil angedeutet, wird bevorzugt eine oszillierende Bewegung des Rotors 20 innerhalb des Gehäuses 10 durchgeführt, um zu vermeiden, dass insbesondere beim Öffnen der Taschen 25 zum Einlass 11 und zum Auslass 12 hin auftretende hohe Strömungsgeschwindigkeiten des Material-Dampf-Gemisches aufgrund des Druckausgleiches zu Verschleißerscheinungen an immer den gleichen Stellen an dem Gehäuse 10 und/oder dem Rotor 20 führen. Diese Axialverschiebbewegung wird kontinuierlich während des Betriebes der Zellenradschleuse ausgeführt, vorzugsweise permanent oszillierend, um Raststellen und damit die Wahrscheinlichkeit von lokalen, tiefen Riefen oder Rillen aufgrund von Kavitation oder Abrasiveffekten zu vermeiden. Die Taschen 25 und das Gehäuse 10 sind so dimensioniert, dass beim Oszillieren des Rotors 20 in dem Gehäuse 10 die Kanten des Gehäuses 10, z.B. am Einlass 11 und Auslass 12, nicht mit der Öffnung des Tasche 25 überlappt.

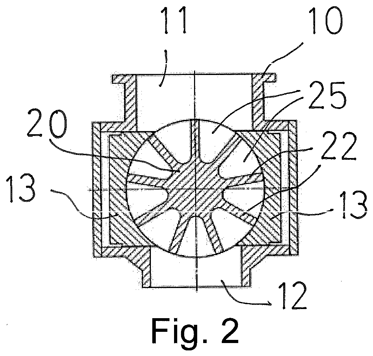

In der Figur 2 ist eine Querschnittsansicht senkrecht zu der Drehachse 15 gezeigt. Das Gehäuse 10 sieht den oben liegenden Einlass 11 und den unten liegenden Auslass 12 vor. Der Rotor 20 weist insgesamt neun Taschen 25 auf, die angenähert V-förmig sich von radial außen nach innen in Richtung auf die Drehachse 15 erstrecken. Die Taschen sind voneinander durch Trennwände 22 getrennt, die sich in Radialrichtung nach außen zum Rotorumfang hin erstrecken. Der Rotor 20 ist zwischen zwei Backen 13 angeordnet, die eine Innenkontur aufweisen, die dem Rotorumfang entspricht. Über die Backen 13 findet eine Abdichtung zwischen dem Einlass 11 und dem Auslass 12 statt. Die Backen 13 sind so dimensioniert, dass immer mindestens eine Tasche 25 vollständig innerhalb der Backe 13 aufgenommen ist und die radial äußere Abdichtung des Rotors 20 im Bereich der Tasche 25 übernimmt, um einen freien Durchgang des unter Druck stehenden Mediums oder des unter Druck stehenden Materials zu verhindern. Der Einlass 11 ebenso wie der Auslass 12 ist möglichst groß bemessen, um die maximale Materialmenge möglichst schnell in die jeweilige Tasche 25 einzubringen oder auszubringen. Die Backen 13 können auswechselbar in dem Gehäuse 10 gelagert sein. Sie können verstellbar oder nachstellbar in dem Gehäuse 10 gelagert sein und gegebenenfalls unter Vorspannung oder auch federnd in Richtung auf den Rotor 20 in dem Gehäuse 10 gelagert sein.

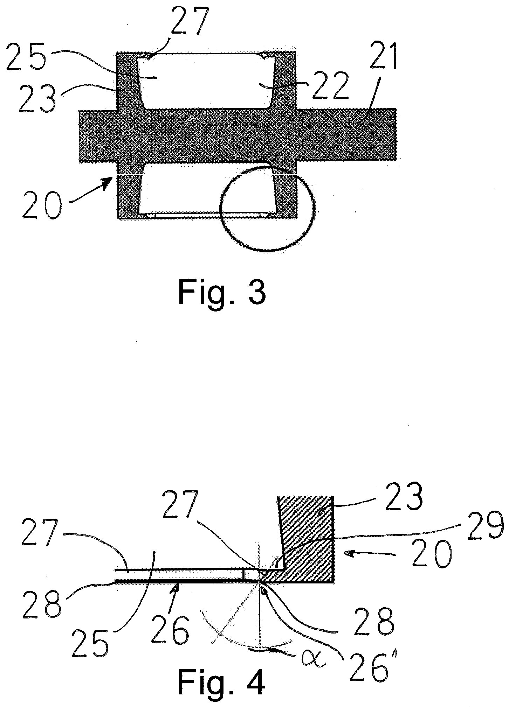

Figur 3 zeigt einen Rotor 20 in einer Längsschnittdarstellung. **In** dem dargestellten Ausführungsbeispiel ist der Rotor 20 einstückig ausgebildet, alternativ ist der Rotor 20 mehrteilig ausgebildet, insbesondere kann die Welle 21 separat von den Trennwänden 22 zwischen den Zellen 25 ausgebildet sein. An den axialen Enden der Trennwände 22 können Seitenscheiben 23 auf der Welle 21 aufgesetzt und angeschweißt und mit den Trennwänden 22 verbunden sein. Der Rotorumfang oder die Mantelfläche des Rotors 20 kann als separates Rohr mit den entsprechenden Taschenöffnungen ausgebildet sein und dann mit den Trennwänden 22 und den Seitenscheiben 23 verschweißt werden. **In** der Darstellung der Figur 3 ist zu erkennen, dass sich die jeweilige Tasche 25 von dem radial innen liegenden Boden zum Außenumfang und zur Taschenöffnung hin zunächst erweitert, also in Axialrichtung breiter wird. An dem äußeren Umfang bildet die Tasche 25 einen Absatz aus, der von der Seitenscheibe 23 jeweils in Axialrichtung nach innen ragt, so dass ein Hinterschnitt 29 entsteht, wenn man von außen auf die Tasche 25 blickt. Die Breite der Taschenöffnung am Rotoraußendurchmesser ist somit geringer als die Breite des Taschenbodens.

Figur 4 zeigt eine Detailansicht der Ausführungsform gemäß Figur 3 im Bereich des Rotorumfanges. Es ist eine in Axialrichtung verlaufende vordere Taschenkante 26 und eine im Wesentlichen in Umfangsrichtung verlaufende zweite Taschenkante 26" gezeigt. An beiden Taschenkanten 26, 26" ist ein Absatz 28 ausgebildet, der senkrecht zu der Drehachse 15 oder in Radialrichtung orientiert ist. Von diesem Absatz 28 erstreckt sich eine Ableiteinrichtung 27 in einem Winkel α in das Tascheninnere, um die Taschenöffnung zu erweitern. **In** der Tasche 25 ist dann durch einen Absatz, der von der Seitenscheibe 23 in Axialrichtung und von der Trennwand 22 in Umfangsrichtung ragt, ein Hinterschnitt 29 ausgebildet. Durch die Ableiteinrichtung 27, die im dargestellten Ausführungsbeispiel als eine Schräge ausgebildet ist, wird ein Materialstrom oder auch ein Medienstrom, beispielsweise Dampfstrom, in das Tascheninnere in einem Winkel zwischen 5° bis 75° abgeleitet. Statt einer Schräge kann die Ableiteinrichtung 27 auch als ein Radius, eine gekrümmte Fläche oder eine Kombination aus zumindest einer Abschrägung und einer gekrümmten Fläche ausgebildet sein. Statt einer einteiligen Ausgestaltung der Ableiteinrichtung 27, wie sie in den Figuren 3 und 4 gezeigt ist, kann die Ableiteinrichtung 27 auch entweder an dem Absatz 28 oder einer Seitenscheibe 23d oder einer Trennwand 22 auswechselbar befestigt sein.

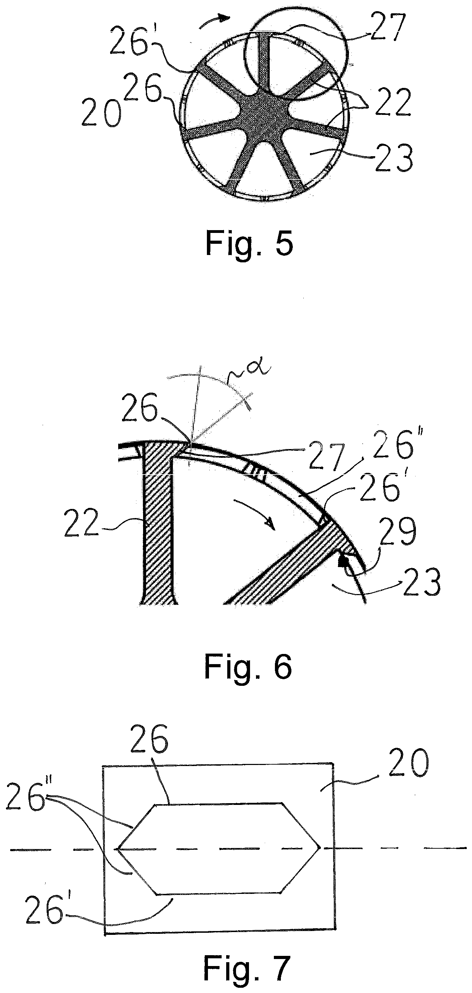

Figur 5 zeigt einen Querschnitt durch einen Rotor 20 in einer siebenzelligen Ausgestaltung. Die Trennwände 22 erstrecken sich radial von der Drehachse 15 nach au-βen zum Rotorumfang, es ist nur eine Seitenscheibe 23 zu erkennen. Der Rotor 20 dreht sich in dem dargestellten Ausführungsbeispiel in Uhrzeigersinn, wie durch den Pfeil dargestellt.

Figur 6 zeigt in einer vergrößerten Darstellung den Bereich des Rotorumfanges in Querschnittsansicht. Die Tasche 25 weist eine in Umfangsrichtung nachlaufende Taschenkante 26, eine in Drehrichtung vorlaufende Taschenkante 26' sowie zwei in Umfangsrichtung verlaufende Taschenkanten 26" auf, von denen nur eine zu erkennen ist. Die nachlaufende Taschenkante 26 weist eine Ableiteinrichtung 27 in Gestalt einer Abschrägung auf, die von der Taschenkante 26 in Drehrichtung nach hinten geneigt ist, so dass sich ein Hinterschnitt 29 ergibt und das Medium und/oder der Dampf in das Tascheninnere geleitet wird. **In** dem dargestellten Ausführungsbeispiel ist die vorlaufende Taschenkante 26' ohne eine Ableiteinrichtung 27 dargestellt. Grundsätzlich ist es möglich, alle Taschenkanten 26, 26', 26" mit Ableiteinrichtungen 27 zu versehen oder auszubilden. Es können auch nur die nachlaufende Taschenkante 26, nur die vorlaufende Taschenkante 26' oder nur die in Umfangsrichtung oder schräg zur Umfangsrichtung verlaufenden Taschenkanten 26" mit einer Ableiteinrichtung 27 versehen sein.

Figur 7 zeigt eine Variante des Rotors 20 mit einer Taschenöffnung, die sechseckig ausgebildet ist und somit zwei senkrecht zur Drehrichtung verlaufende Taschenkanten 26, 26' sowie vier schräg zur Umfangsrichtung verlaufende Taschenkanten 26" aufweist.

Durch die Ableiteinrichtungen 27, insbesondere das Abschrägen und Abrunden der Taschenkanten 26 der Taschen 25 der Zellenradschleuse, wird das Druckmedium und das unter Druck stehende Material von kritischen Stellen an den Rotor 20 oder dem Gehäuse 10, insbesondere den Backen 13 abgelenkt, was zu einem verringerten Verschleiß der Zellenradschleuse und damit zu einer erhöhten Standzeit führt. Durch eine Kombination der Ableiteinrichtung 27 oder der Ableiteinrichtungen 27 mit einer Axialverschieblichkeit entlang der Drehachse 15 kann eine weitere Verbesserung der Standzeit einer Zellenradschleuse erreicht werden. Die Verschieblichkeit des Rotors 20 innerhalb des Gehäuses 10 kann unabhängig von Ableiteinrichtungen 27 in einer Zellenradschleuse verwirklicht werden und trägt eigenständig zu einer Verschleißminderung und einer Standzeiterhöhung der Zellenradschleuse bei.

## Patentansprüche

1. Zellenradschleuse mit einem Gehäuse (10), das einen Einlass (11) und einen Auslass (12) und einen in dem Gehäuse (10) drehbar um eine Drehachse (15) gelagerten Rotor (20) aufweist, in dem Rotor (20) sind Taschen (25) ausgebildet, in denen Material von dem Einlass (11) zu dem Auslass (12) transportiert wird, **dadurch gekennzeichnet, dass** der Rotor (20) in dem Gehäuse (10) entlang der Drehachse (15) oszillierend axial verschieblich gelagert ist und dem Rotor (20) ein Antrieb (30) zugeordnet ist, der den Rotor (20) in Axialrichtung verlagert.

2. Zellenradschleuse nach Anspruch 1, **dadurch gekennzeichnet, dass** der Antrieb (30) den Rotor (20) kontinuierlich und/oder permanent axial verlagert.

3. Zellenradschleuse nach Anspruch 1 oder 2, **dadurch gekennzeichnet, dass** der Antrieb (30) als hydraulischer, elektromotorischer oder pneumatischer Antrieb ausgebildet ist.

4. Zellenradschleuse nach einem der voranstehenden Ansprüche, **dadurch gekennzeichnet, dass** an zumindest einer an einem äußeren Umfang des Rotors (20) befindlichen Taschenkante (26, 26', 26") eine Ableiteinrichtung (27) angeordnet ist, die das Material in das Tascheninnere ablenkt.

5. Zellenradschleuse nach Anspruch 4, **dadurch gekennzeichnet, dass** die Ableiteinrichtung (27) eine Abschrägung und/oder eine Krümmung aufweist.

6. Zellenradschleuse nach Anspruch 4 oder 5, **dadurch gekennzeichnet, dass** die Ableiteinrichtung (27) an dem Rotor (20) ausgebildet und/oder befestigt ist.

7. Zellenradschleuse nach einem der Ansprüche 4 bis 6, **dadurch gekennzeichnet, dass** die Ableiteinrichtung (27) mehrteilig ausgebildet ist.

8. Zellenradschleuse nach einem der Ansprüche 4 bis 7, **dadurch gekennzeichnet, dass** an zumindest einer Taschenkante (26, 26', 26") ein Absatz (28) ausgebildet ist.

9. Zellenradschleuse nach einem der Ansprüche 4 bis 8, **dadurch gekennzeichnet, dass** die Ableiteinrichtung (27) in einem Ablenkwinkel (α) zwischen 5° und 75° zu dem Radius von der Taschenkante (26, 26') oder von der Taschenkante (26") der Senkrechten zu der Drehachse (15) geneigt ist.

10. Zellenradschleuse nach einem der voranstehenden Ansprüche, **dadurch gekennzeichnet, dass** der Rotor (20) drei bis 15 Taschen (25) gleichmäßig über den Umfang des Rotors (20) verteilt aufweist.

11. Zellenradschleuse nach einem der voranstehenden Ansprüche, **dadurch gekennzeichnet, dass** der Rotor (20) in dem Gehäuse (10) zwischen zwei auswechselbaren Backen (13) angeordnet ist.

12. Zellenradschleuse nach einem der voranstehenden Ansprüche, **dadurch gekennzeichnet, dass** Rohrleitungen und/oder Öffnungen für einen Druckausgleich in den Taschen (25) mit den Taschen (25) in strömungstechnischer Verbindung stehen.

13. Verfahren zum Betreiben einer Zellenradschleuse nach einem der voranstehenden Ansprüche, **dadurch gekennzeichnet, dass** der Rotor (20) während der Drehung um die Drehachse (15) entlang der Drehachse (15) oszillierend verschoben wird.

14. Verfahren nach Anspruch 13, **dadurch gekennzeichnet, dass** ein Druckausgleich in den Taschen (25) mittels Rohrleitungen und/oder Ausgleichsöffnungen vor dem Öffnen der Taschen (25) in Richtung Einlass (11) und/oder Auslass (12) ausgeführt wird.

## Claims

1. Cell wheel lock having a housing (10) which has an inlet (11) and an outlet (12) and a rotor (20) mounted in the housing (10) so as to be rotatable about an axis of rotation (15), pockets (25) are formed in the rotor (20), in which pockets material is transported from the inlet (11) to the outlet (12), **characterized in that** the rotor (20) is mounted in the housing (10) so as to be axially displaceable in an oscillating manner along the axis of rotation (15) and **in that** the rotor (20) is assigned a drive (30) which displaces the rotor (20) in axial direction.

2. Cell wheel lock according to claim 1, **characterized in that** the drive (30) axially displaces the rotor (20) continuously and/or permanently.

3. Cell wheel lock according to claim 1 or 2, **characterized in that** the drive (30) is designed as a hydraulic drive, electric motor or pneumatic drive.

4. Cell wheel lock according to one of the preceding claims, **characterized in that** a diverting device (27), which deflects the material into the interior of the pocket, being arranged on at least one pocket edge (26, 26', 26") located on an outer circumference of the rotor (20).

5. Cell wheel lock according to claim 4, **characterized in that** the deflecting device (27) has a bevel and/or a curvature.

6. Cell wheel lock according to claim 4 or 5, **characterized in that** the diverting device (27) is formed and/or fastened to the rotor (20).

7. Cell wheel lock according to one of the claims 4 to 6, **characterized in that** the diverting device (27) is designed in several parts.

8. Cell wheel lock according to one of the claims 4 to 7, **characterized in that** a shoulder (28) is formed on at least one pocket edge (26, 26', 26").

9. Cell wheel lock according to one of the claims 4 to 8, **characterized in that** the diverting device (27) is inclined at a deflection angle (α) of between 5° and 75° to the radius from the pocket edge (26, 26') or from the pocket edge (26") of the perpendicular to the axis of rotation (15).

10. Cell wheel lock according to one of the preceding claims, **characterized in that** the rotor (20) has three to 15 pockets (25) evenly distributed over the circumference of the rotor (20).

11. Cell wheel lock according to one of the preceding claims, **characterized in that** the rotor (20) is arranged in the housing (10) between two interchangeable jaws (13).

12. Cell wheel lock according to one of the preceding claims, **characterized in that** pipelines and/or openings for pressure equalization in the pockets (25) are in fluidic connection with the pockets (25).

13. Method for operating a Cell wheel lock according to one of the preceding claims, **characterized in that** the rotor (20) is displaced in an oscillating manner along the axis of rotation (15) during rotation about the axis of rotation (15).

14. Method according to claim 13, **characterized in that** pressure equalization in the pockets (25) is carried out by means of pipelines and/or equalization openings before the pockets (25) are opened in the direction of the inlet (11) and/or outlet (12).

## Revendications

1. Ecluse à roue cellulaire comprenant un boîtier (10) qui présente une entrée (11) et une sortie (12) et un rotor (20) monté dans le boîtier (10) de manière à pouvoir tourner autour d'un axe de rotation (15), des poches (25) étant formées dans le rotor (20), dans lesquelles un matériau est transporté de l'entrée (11) à la sortie (12),
**caractérisée en ce que**
le rotor (20) est monté dans le boîtier (10) de manière à pouvoir être déplacé axialement en oscillation le long de l'axe de rotation (15), et le rotor (20) est associé à un entraînement (30) qui déplace le rotor (20) dans la direction axiale.

2. Ecluse à roue cellulaire selon la revendication 1,
**caractérisée en ce que** l'entraînement (30) déplace le rotor (20) axialement de manière continue et/ou permanente.

3. Ecluse à roue cellulaire selon la revendication 1 ou 2,
**caractérisée en ce que** l'entraînement (30) est conçu comme un entraînement hydraulique, électromoteur ou pneumatique.

4. Ecluse à roue cellulaire selon l'une des revendications précédentes, **caractérisée en ce qu'**un dispositif de déviation (27) est disposé sur au moins un bord de poche (26, 26', 26"), situé sur une circonférence extérieure du rotor (20), pour dévier le matériau vers l'intérieur de la poche.

5. Ecluse à roue cellulaire selon la revendication 4,
**caractérisée en ce que** le dispositif de déviation (27) présente un chanfrein et/ou une courbure.

6. Ecluse à roue cellulaire selon la revendication 4 ou 5,
**caractérisée en ce que** le dispositif de déviation (27) est formé et/ou fixé sur le rotor (20).

7. Ecluse à roue cellulaire selon l'une des revendications 4 à 6, **caractérisée en ce que** le dispositif de déviation (27) est réalisé en plusieurs parties.

8. Ecluse à roue cellulaire selon l'une des revendications 4 à 7, **caractérisée en ce qu'**un épaulement (28) est formé sur au moins un bord de poche (26, 26', 26").

9. Ecluse à roue cellulaire selon l'une des revendications 4 à 8, **caractérisée en ce que** le dispositif de déviation (27) est incliné d'un angle de déviation (α) compris entre 5° et 75° par rapport au rayon du bord de poche (26, 26') ou du bord de poche (26") de la perpendiculaire à l'axe de rotation (15).

10. Ecluse à roue cellulaire selon l'une des revendications précédentes, **caractérisée en ce que** le rotor (20) présente trois à quinze poches (25) réparties uniformément sur la circonférence du rotor (20).

11. Ecluse à roue cellulaire selon l'une des revendications précédentes, **caractérisée en ce que** le rotor (20) dans le boîtier (10) est disposé entre deux mâchoires interchangeables (13).

12. Ecluse à roue cellulaire selon l'une des revendications précédentes, **caractérisée en ce que** des conduites et/ou des ouvertures destinées à une compensation de pression dans les poches (25) sont en communication fluidique avec les poches (25).

13. Procédé de fonctionnement d'une écluse à roue cellulaire selon l'une des revendications précédentes,
**caractérisé en ce que** le rotor (20) est déplacé en oscillation le long de l'axe de rotation (15) pendant la rotation autour de l'axe de rotation (15).

14. Procédé selon la revendication 13,
**caractérisé en ce qu'**une compensation de pression dans les poches (25) est effectuée au moyen de conduites et/ou d'ouvertures de compensation avant l'ouverture des poches (25), en direction de l'entrée (11) et/ou de la sortie (12).
